(19) **Europäisches Patentamt / European Patent Office / Office européen des brevets**

(11) **EP 4 277 812 B1**

(12) **FASCICULE DE BREVET EUROPEEN**

(45) Date de publication et mention de la délivrance du brevet:
**20.11.2024 Bulletin 2024/47**

(21) Numéro de dépôt: **21848263.6**

(22) Date de dépôt: **02.12.2021**

(51) Classification Internationale des Brevets (IPC):
**B60R 16/023** *(2006.01)*

(52) Classification Coopérative des Brevets (CPC):
**B60R 16/0234; B60R 16/0231**

(86) Numéro de dépôt international:
**PCT/FR2021/052189**

(87) Numéro de publication internationale:
**WO 2022/152985 (21.07.2022 Gazette 2022/29)**

(54) **PROCÉDÉ ET SYSTÈME POUR DÉTERMINER DES DONNÉES CARACTÉRISANT AU MOINS UNE ÉVOLUTION DE LA TEMPÉRATURE D'UN COMPOSANT D'UN VÉHICULE AUTOMOBILE AU COURS D'UN INTERVALLE DE TEMPS**

VERFAHREN UND SYSTEM ZUR BESTIMMUNG VON DATEN, DIE MINDESTENS EINE TEMPERATURÄNDERUNG EINER KOMPONENTE EINES KRAFTFAHRZEUGS WÄHREND EINES ZEITINTERVALLS CHARAKTERISIEREN

METHOD AND SYSTEM FOR DETERMINING DATA CHARACTERIZING AT LEAST ONE CHANGE IN THE TEMPERATURE OF A COMPONENT OF A MOTOR VEHICLE DURING A TIME INTERVAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.01.2021 FR 2100241**

(43) Date de publication de la demande:
**22.11.2023 Bulletin 2023/47**

(73) Titulaire: **Stellantis Auto SAS**
**78300 Poissy (FR)**

(72) Inventeurs:
- **MA, Ze**
  **91190 GIF SUR YVETTE (FR)**
- **NDIAYE, Papa Medoune**
  **77176 SAVIGNY LE TEMPLE (FR)**

(56) Documents cités:
**EP-A1- 3 296 964     WO-A1-93/04353**
**FR-A1- 2 959 031     FR-A1- 3 010 554**

**Description**

**Domaine technique de l'invention**

La présente invention revendique la priorité de la demande française 2100241 déposée le 12.01.2021 dont le contenu (texte, dessins et revendications) est ici incorporé par référence. La présente invention concerne le domaine des systèmes informatiques et des procédés informatisés pour aider à la conception des composants de véhicules automobiles, notamment les systèmes et procédés qui permettent de déterminer la sureté de fonctionnement des composants des véhicules automobiles, et ce en tenant compte en particulier des conséquences des variations de température qui affectent la longévité de certains composants de véhicules automobiles. L'invention porte en particulier sur un procédé de détermination, par un système informatique, de données caractérisant au moins une évolution de la température d'un composant d'un véhicule automobile au cours d'un intervalle de temps. L'invention concerne également un système informatique mettant en oeuvre un tel procédé.

**État de la technique antérieure**

On sait que la durée de vie de certains composants de véhicules automobiles est très importante. C'est notamment le cas pour les dispositifs informatiques et électroniques embarqués qui sont aujourd'hui présents dans la plupart des véhicules automobiles. Pour de tels composants, le risque de panne est donc très limité et il s'avère par conséquent délicat de déterminer avec précision la durée de vie, i.e. la fiabilité, de ces composants. Un procédé d'estimation de la fiabilité d'un équipement électronique pour véhicule est décrit dans FR2959031.

En effet, les ingénieurs fiabilistes ou les concepteurs de composants ayant des exigences de sureté de fonctionnement savent que, lorsqu'il s'agit de déterminer la sureté de fonctionnement de composants, l'on doit pouvoir établir le risque de panne. Or, pour chaque composant, le risque de panne ne peut être établi sans une connaissance du profil de mission d'usage du composant en question, i.e. de l'utilisation qui est faite du composant au cours du temps. Ainsi, pour les composants de véhicules automobiles qui subissent des contraintes thermiques, le profil de température, i.e. l'évolution de la température du composant au cours du temps, est indispensable pour pouvoir déterminer de manière fiable le risque de panne, risque de panne dont peuvent ensuite être extrapolés des éléments sur la longévité, i.e. la fiabilité, des composants. Cependant, pour un constructeur automobile, cela implique d'obtenir une connaissance de tous les profils de température de tous les composants pour tous les véhicules. En effet, chaque profil de mission d'usage, et donc chaque profil de température, varie d'un composant à l'autre, d'un véhicule à l'autre, en fonction de sa localisation, des conditions de conduite, de l'environnement extérieur, etc. Or, même si l'on sait possible aujourd'hui d'équiper les véhicules automobiles de capteurs de température pour mesurer la température des composants durant l'utilisation des véhicules et de transmettre des données de mesure vers des systèmes informatiques distants pour effectuer des traitements afin d'en extraire des statistiques sur la longévité des composants, une telle solution reste inenvisageable pour les constructeurs automobiles dans la mesure où elle implique une augmentation significative du coût des véhicules à cause de la nécessité d'adapter pour chaque composant des moyens de mesure de température et de transmission de données appropriés.

**Résumé de l'invention**

L'invention vise à pallier ces inconvénients. L'invention a en effet pour but de fournir un procédé et un système qui permettent de déterminer l'évolution de la température d'un composant d'un véhicule automobile au cours d'un intervalle de temps. En outre, de manière subsidiaire, l'invention vise à fournir un procédé et un système qui contribuent pour permettre de déterminer avec une plus grande précision la longévité, i.e. la fiabilité, des composants de véhicules automobiles, en particulier ceux qui sont affectés par des variations de leur température. Par ses moyens, l'invention s'applique donc avantageusement aux phases de recherche et de développement de composants de véhicules automobiles, en ayant pour dessein de fournir aux concepteurs de composants de véhicules automobiles des outils informatiques qui facilitent les étapes de contrôle de la sureté de fonctionnement des composants des véhicules.

Ces buts sont atteints, selon un premier objet de l'invention, au moyen d'un procédé de détermination, par un système informatique, de données caractérisant au moins une évolution de la température d'un composant d'un véhicule automobile au cours d'un intervalle de temps, le procédé comprenant les étapes de :

  i) acquérir des données caractérisant au moins une probabilité de réalisation d'au moins une séquence d'utilisation du véhicule ;
  ii) acquérir des données caractérisant au moins une durée ou au moins une distance et au moins une température stabilisée en regard d'au moins un segment d'au moins une séquence d'utilisation du véhicule ;
  iii) acquérir des données caractérisant au moins une valeur d'inertie thermique en regard d'au moins un segment ;

iv) acquérir des données caractérisant au moins un nombre de séquences d'utilisation ;

v) acquérir des données caractérisant au moins une valeur représentant l'autonomie du véhicule ;

vi) déterminer des données caractérisant une estimation d'un nombre de séquences d'utilisation réalisées ;

vii) déterminer des données caractérisant une séquence d'utilisation particulière du véhicule en fonction des données caractérisant au moins une probabilité de réalisation d'au moins une séquence d'utilisation du véhicule ; viii) déterminer des données caractérisant une durée pour chacun des segments de la séquence d'utilisation particulière du véhicule ;

ix) déterminer des données caractérisant une valeur de température stabilisée pour chacun des segments de la séquence d'utilisation particulière du véhicule ;

x) déterminer des données caractérisant une valeur ponctuelle de la température du composant durant un segment courant de la séquence d'utilisation particulière du véhicule en fonction de données caractérisant la température stabilisée durant le segment de la séquence d'utilisation particulière du véhicule qui précède le segment courant de la séquence d'utilisation particulière du véhicule, de données caractérisant la différence entre la température stabilisée durant le segment courant de la séquence d'utilisation particulière du véhicule et la température stabilisée durant le segment de la séquence d'utilisation particulière du véhicule qui précède le segment courant de la séquence d'utilisation particulière du véhicule et de données caractérisant le rapport entre la durée écoulée depuis le début du segment courant de la séquence d'utilisation particulière du véhicule et la valeur d'inertie thermique pour le segment courant déterminée à partir des données caractérisant au moins une valeur d'inertie thermique en regard d'au moins un segment ; et

xi) déterminer les données caractérisant au moins une évolution de la température d'un composant d'un véhicule automobile en utilisant les données caractérisant au moins une valeur ponctuelle de la température du composant durant un segment courant de la séquence d'utilisation particulière du véhicule.

Selon une variante, l'étape vi) peut comprendre une étape consistant à réaliser un tirage aléatoire à partir des données caractérisant au moins un nombre de séquences d'utilisation.

Selon une autre variante, l'étape viii) peut comprendre une étape consistant à réaliser un tirage aléatoire à partir des données caractérisant au moins une durée en regard d'au moins un segment d'au moins une séquence d'utilisation du véhicule.

Selon une autre variante, l'étape ix) peut comprendre une étape consistant à réaliser un tirage aléatoire à partir des données caractérisant au moins une température stabilisée en regard d'au moins un segment d'au moins une séquence d'utilisation du véhicule.

Selon une autre variante, le procédé peut comprendre en outre une étape consistant à déterminer des données caractérisant au moins une valeur de la température du composant en regard d'une valeur indicative d'une proportion, d'une durée et/ou d'un mode d'utilisation du véhicule.

Selon une autre variante, le procédé peut comprendre en outre les étapes de :

- utiliser les données caractérisant au moins une évolution de la température d'un composant d'un véhicule automobile pour déterminer, par transformée de Fourier, des données caractérisant les fréquences et les amplitudes correspondant à plusieurs séquences d'utilisation ;

- déterminer des données caractérisant un nombre de cycles de laboratoire équivalent en fonction des données caractérisant les fréquences et les amplitudes correspondant à plusieurs séquences d'utilisation.

Selon une autre variante, les données caractérisant au moins une probabilité de réalisation d'au moins une séquence d'utilisation du véhicule sont générées de sorte à matérialiser une chaine de Markov.

En outre, l'invention a également pour objet un système pour déterminer des données caractérisant au moins une évolution de la température d'un composant d'un véhicule automobile au cours d'un intervalle de temps, le système comprenant au moins une unité de traitement d'informations, comprenant au moins un processeur, et un support de stockage de données configurés pour mettre en oeuvre un procédé tel que décrit ci-dessus.

De plus, l'invention a aussi pour objet un programme comprenant des instructions de code de programme pour l'exécution des étapes d'un procédé tel que décrit ci-dessus lorsque ledit programme est exécuté sur un ordinateur et/ou un processeur.

Par ailleurs, l'invention a également pour objet un support utilisable dans un ordinateur sur lequel un programme tel que décrit ci-dessus est enregistré.

## Brève description des figures

D'autres caractéristiques et avantages de l'invention apparaîtront à l'examen de la description détaillée ci-après, et des dessins annexés, sur lesquels :

[Fig. 1] est un diagramme fonctionnel d'un système selon l'invention ;

[Fig. 2] est un organigramme illustrant les étapes d'un procédé selon l'invention ;

[Fig. 3] est un graphique illustrant des données caractérisant au moins une évolution de la température d'un composant d'un véhicule automobile au cours d'un intervalle de temps selon l'invention

[Fig. 4] est une illustration schématique de données caractérisant au moins une valeur de la température du composant en regard d'une valeur indicative d'une proportion, d'une durée et/ou d'un mode d'utilisation du véhicule selon l'invention ; et

[Fig. 5] est un graphique illustrant des données caractérisant un nombre de cycles de laboratoire équivalent selon l'invention.

**Description détaillée de l'invention**

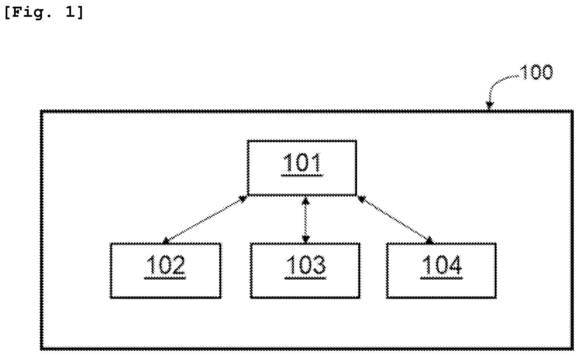

Selon l'invention, un système 100 pour déterminer des données caractérisant au moins une évolution de la température d'un composant d'un véhicule automobile au cours d'un intervalle de temps est un système informatique, représenté schématiquement à la figure 1, qui comprend une unité de traitement d'informations 101, comprenant un ou plusieurs processeurs, un support de stockage de données 102, au moins une interface d'entrée et sortie 103, permettant la réception de données et l'émission de données, et une interface graphique 104. Selon certains modes de réalisation de l'invention, le système 100 selon l'invention comprend un ou plusieurs ordinateurs, un ou plusieurs serveurs, un ou plusieurs supercalculateurs et/ou n'importe quelle combinaison comprenant l'un de ces systèmes informatiques. Selon un autre mode de réalisation, le système 100 selon l'invention est hébergé sur un serveur faisant partie d'une infrastructure informatique en nuage.

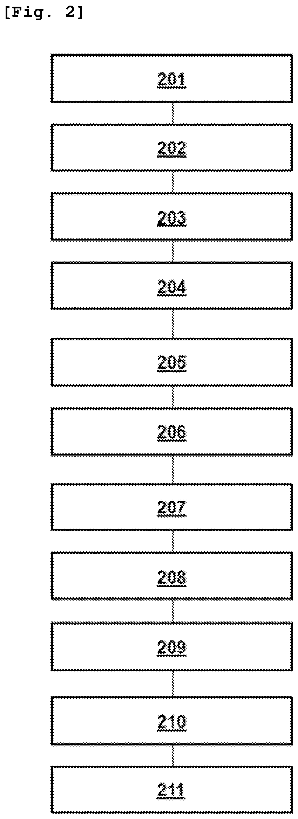

Selon l'invention, tous les éléments décrits ci-dessus contribuent pour permettre au système 100 selon l'invention de mettre en oeuvre un procédé de détermination de données caractérisant au moins une évolution de la température d'un composant d'un véhicule automobile au cours d'un intervalle de temps, tel que décrit ci-dessous en lien avec la figure 2.

Selon une première étape 201 du procédé selon l'invention, le système 100 selon l'invention acquiert, par exemple en interagissant avec son support de stockage de données 102 et/ou son interface d'entrée et sortie 103, des données caractérisant au moins une probabilité de réalisation d'au moins une séquence d'utilisation du véhicule. En effet, selon l'invention, on considère que l'utilisation d'un véhicule automobile au cours d'un intervalle de temps préétabli, choisi pour correspondre à une durée d'utilisation moyenne (e.g. 7 ans), se décompose en une pluralité de « séquences d'utilisation », qui se décomposent chacune en plusieurs « segments » définissant chacun un type d'utilisation spécifique qui est faite du véhicule au cours d'un intervalle de temps. Ainsi, une séquence d'utilisation au sens de la présente invention définit donc une séquence de plusieurs types d'utilisation du véhicule qui sont réalisés consécutivement. Par exemple, une séquence d'utilisation selon l'invention peut définir la succession de segments, i.e. de types d'utilisation, suivants : *Séquence(i) = (Parking - ville - bouchon - route - ville - parking).* Ainsi, selon cet exemple, une séquence d'utilisation du véhicule stipule que, selon le premier segment de la séquence d'utilisation, le véhicule a d'abord été utilisé selon un premier type d'utilisation « parking », puis, selon le deuxième segment de la séquence d'utilisation, le véhicule a été utilisé selon un deuxième type d'utilisation « ville », puis, selon le troisième segment, selon un troisième type d'utilisation « bouchon », etc. Ainsi, au cours de cette première étape 201 du procédé selon l'invention, le système 100 selon l'invention s'attache à acquérir des données qui permettront par la suite de déterminer un profil de température d'un composant, en particulier en décomposant celui-ci selon une succession de séquences d'utilisation, elles-mêmes se divisant selon plusieurs segments identifiant des types distincts d'utilisation qui sont faits du véhicule. De plus, selon l'invention, les données acquises par le système 100 selon l'invention au cours de cette première étape 201 du procédé selon l'invention caractérisent non pas des séquences d'utilisation mais elles caractérisent au moins une probabilité de réalisation d'au moins une séquence d'utilisation du véhicule. En d'autres termes, le système 100 selon l'invention acquiert au cours de la première étape 201 du procédé selon l'invention des données qui identifient seulement indirectement des séquences d'utilisation, et ce en les caractérisant au moyen des probabilités de leurs réalisations. Concrètement, les données caractérisant au moins une probabilité de réalisation d'au moins une séquence d'utilisation du véhicule sont par exemple générées de sorte à matérialiser une chaine de Markov, i.e. elles sont générées de telle sorte que les différents segments qui sont susceptibles de former une séquence d'utilisation, i.e. les différents types d'utilisation qui peuvent être faits d'un véhicule (parking, ville, bouchon, bouchon-ville, autoroute, route, etc.), sont identifiés au moyen de variables aléatoires distinctes liées par des probabilités. Or, ce choix délibéré quant au format des données acquises par le système 100 selon l'invention au cours de cette première étape 201 du procédé selon l'invention va avantageusement permettre ensuite au système 100 selon l'invention, comme on le verra ci-dessous, de générer de manière aléatoire des séquences d'utilisation d'un véhicule. Et, en mettant bout à bout des séquences d'utilisation aléatoires, ces données caractérisant au moins une probabilité de réalisation d'une séquence d'utilisation du véhicule acquises par le système 100 au cours de cette première étape 201 du procédé selon l'invention vont permettre au système 100 selon l'invention de générer de manière aléatoire un profil de température d'un composant d'un véhicule automobile.

Selon une deuxième étape 202 du procédé selon l'invention, le système 100 selon l'invention acquiert des données caractérisant au moins une durée ou au moins une distance et au moins une température stabilisée en regard d'au moins un segment d'au moins une séquence d'utilisation du véhicule. En effet, selon l'invention, on considère qu'un segment, i.e. un type d'utilisation, est caractérisé par une durée et/ou une distance et par une température stabilisée (e.g. moyenne) du composant durant le segment. Par exemple, un segment « parking » de 2h durant lequel la température stabilisée d'un composant est $Tp.$ De plus, ici aussi, les données caractérisant au moins une durée ou au moins une distance et au moins une température stabilisée en regard d'au moins un segment d'au moins une séquence d'utilisation du véhicule acquises par le système 100 selon l'invention au cours de cette deuxième étape 202 du procédé selon l'invention sont générées d'une manière particulière. En effet, chacune est préférentiellement identifiée par une densité de probabilité spécifique. Et, ici aussi, ce choix délibéré quant au format de ces données va avantageusement permettre ensuite au système 100 selon l'invention, comme on le verra ci-dessous, d'introduire encore du biais probabiliste dans les séquences d'utilisation qui seront déterminées, notamment au niveau des durées ou des distances parcourues et des températures stabilisées durant les segments, permettant ainsi à terme de générer de manière aléatoire un profil de température d'un composant d'un véhicule qui retranscrit au mieux de la réalité d'une utilisation réelle d'un véhicule (i.e. d'un composant) par un ou plusieurs conducteurs humains.

Selon une troisième étape 203 du procédé selon l'invention, le système 100 selon l'invention acquiert des données caractérisant au moins une valeur d'inertie thermique en regard d'au moins un segment. En effet, au sens de la présente invention, l'inertie thermique correspond à la durée nécessaire, lorsque le véhicule est utilisé selon un segment particulier, pour que la température du composant atteigne la température stabilisée. L'inertie thermique est donc propre à chaque véhicule, elle dépend en effet de l'architecture sous capot du véhicule et du segment selon lequel le véhicule est utilisé. Ainsi, les données caractérisant au moins une valeur d'inertie thermique en regard d'au moins un segment sont stockées sur le support de stockage de données 102, par exemple dans une base de données, et elles renseignent au moins une valeur d'inertie thermique pour chaque segment qui est susceptible de former une séquence d'utilisation du véhicule.

Selon une quatrième étape 204 du procédé selon l'invention, le système 100 selon l'invention acquiert des données caractérisant au moins un nombre de séquences d'utilisation. Plus précisément, au cours de cette étape, le système 100 selon l'invention s'attache à acquérir des données caractérisant des statistiques établies en regard d'un nombre de séquences d'utilisation qui ont pu être réalisées par des conducteurs du véhicule considéré. En d'autres termes, le système 100 selon l'invention acquiert à ce stade, en interagissant préférentiellement avec son support de stockage de données 102, des données qui renseignent sur au moins un nombre d'utilisation du véhicule qui ont pu être effectuées par au moins un conducteur, de préférence sur plusieurs nombres de séquences d'utilisation du véhicule qui ont pu être effectuées par plusieurs conducteurs. Ainsi, le système 100 selon l'invention acquiert au cours de cette quatrième étape 204 du procédé selon l'invention des données qui renseignent sur la durée de vie, i.e. la longévité, du véhicule considéré.

Selon une cinquième étape 205 du procédé selon l'invention, le système 100 selon l'invention acquiert des données caractérisant au moins une valeur représentant l'autonomie du véhicule. Ainsi, lorsque le véhicule considéré est un véhicule à motorisation thermique, ces données renseignent sur par exemple sur la consommation du véhicule, en identifiant par exemple des consommations différentes en regard de segments de séquences d'utilisation différents. Alternativement, ou cumulativement, ces données renseignent sur une distance moyenne qui peut être parcourue avec un plein de carburant. De même, lorsque le véhicule considéré est un véhicule à motorisation électrique, les données acquises par le système 100 selon l'invention au cours de cette étape peuvent renseigner sur la consommation électrique du véhicule en regard de segments de séquences d'utilisation particuliers et/ou sur une distance moyenne qui peut être parcourue avec une pleine charge de la (ou des) batterie du véhicule considéré. Comme on le verra ci-dessous, ces données, qui sont préférentiellement stockées sur le support de stockage de données 102, vont par exemple permettre au système 100 selon l'invention, entre autres, d'identifier des températures du composant qui correspondent à des phases de charge d'un véhicule électrique.

Selon une sixième étape 206 du procédé selon l'invention, le système 100 selon l'invention détermine des données caractérisant une estimation d'un nombre de séquences d'utilisation réalisées. Pour ce faire, le système 100 selon l'invention réalise un premier tirage aléatoire à partir des données caractérisant au moins un nombre de séquences d'utilisation. En d'autres termes, le système 100 selon l'invention utilise les données qui concernent des statistiques de nombres de séquences d'utilisation réellement effectuées par des conducteurs du véhicule considéré acquises au cours de la cinquième étape 205 du procédé selon l'invention pour, de manière aléatoire, déterminer un nombre séquences d'utilisation qui pourraient vraisemblablement être effectuées avec le véhicule considéré. Par cette étape, le système 100 selon l'invention établi une longévité spécifique vraisemblable pour le véhicule concerné et, donc, pour le composant.

Selon une septième étape 207 du procédé selon l'invention, le système 100 selon l'invention détermine des données caractérisant une séquence d'utilisation particulière du véhicule en fonction des données caractérisant au moins une probabilité de réalisation d'au moins une séquence d'utilisation du véhicule. En effet, après avoir identifié une longévité spécifique vraisemblable du composant, le système 100 selon l'invention doit décomposer cette longévité en une pluralité de séquences d'utilisation du véhicule et, pour ce faire, il procède de manière itérative en identifiant successivement des séquences d'utilisation particulières, i.e. des séquences d'utilisation formées de segments particuliers. Et, pour d'identifier une séquence d'utilisation particulière, le système 100 selon l'invention procède avantageusement en réalisant un deuxième tirage aléatoire à partir des données caractérisant au moins une probabilité de réalisation d'au moins une séquence d'utilisation du véhicule acquises au cours de la première étape 201 du procédé. Et lorsque les données caractérisant une probabilité de réalisation d'au moins une séquence d'utilisation du véhicule sont avantageusement générées de sorte à matérialiser une chaine de Markov, le système 100 selon l'invention est ici en mesure de déterminer de manière aléatoire une pluralité de séquences d'utilisation particulières. Ainsi, au terme de cette septième étape 207 du procédé selon l'invention, le système 100 selon l'invention a déterminé au moins une séquence d'utilisation particulière telle que, par exemple : *Séquence_part = (Parking - ville - ville bouchon - route - parking).*

Selon une huitième étape 208 du procédé selon l'invention, le système 100 selon l'invention détermine des données caractérisant une durée pour chacun des segments de la séquence d'utilisation particulière du véhicule. Et, pour ce faire, ici encore, le système 100 selon l'invention procède en réalisant un troisième tirage aléatoire à partir des données caractérisant au moins une durée en regard d'au moins un segment d'au moins une séquence d'utilisation du véhicule acquises au cours de la deuxième étape 202 du procédé. Ainsi, au terme de cette huitième étape 208, le système 100 selon l'invention a modifié la séquence particulière déterminée à l'étape précédente du procédé de telle sorte que : *Séquence_part = ( 3h / Parking - 5mn / ville - 10mn / ville bouchon - 20mn / route - 1h / parking).* Alternativement, ou cumulativement, le système 100 selon l'invention détermine de manière similaire des distances, en réalisant pour ce faire le troisième tirage aléatoire à partir des données caractérisant au moins une distance en regard d'au moins un segment d'au moins une séquence d'utilisation acquises au cours de la deuxième étape 202 du procédé. Dans ce cas, la séquence particulière modifiée par le système 100 selon l'invention au cours de cette huitième étape 208 du procédé est telle que : *Séquence_part = ( 0km / Parking - 7,3km / ville - 1km / ville bouchon - 17,8km / route - 0km / parking).*

Selon une neuvième étape 209 du procédé selon l'invention, le système 100 selon l'invention détermine des données caractérisant une valeur de température stabilisée pour chacun des segments de la séquence d'utilisation particulière du véhicule. Et, pour ce faire, ici encore, le système 100 selon l'invention procède en réalisant un quatrième tirage aléatoire à partir des données caractérisant au moins une température stabilisée en regard d'au moins un segment d'au moins une séquence d'utilisation du véhicule acquises au cours de la deuxième étape 202 du procédé. Ainsi, au terme de cette huitième étape 208, le système 100 selon l'invention a modifié la séquence particulière déterminée à l'étape précédente du procédé de telle sorte que : *Séquence_part = ( 3h / Parking /5°C - 5mn / ville / 50°C - 10mn / ville bouchon / 80°C - 20mn / route /45°C - 1h / parking / 10°C).*

Selon une dixième étape 210 du procédé selon l'invention, le système 100 selon l'invention détermine des données caractérisant une valeur ponctuelle de la température du composant durant un segment courant de la séquence d'utilisation particulière du véhicule en fonction de données caractérisant la température stabilisée durant le segment de la séquence d'utilisation particulière du véhicule qui précède le segment courant de la séquence d'utilisation particulière du véhicule, de données caractérisant la différence entre la température stabilisée durant le segment courant de la séquence d'utilisation particulière du véhicule et la température stabilisée durant le segment de la séquence d'utilisation particulière du véhicule qui précède le segment courant de la séquence d'utilisation particulière du véhicule et de données caractérisant le rapport entre la durée écoulée depuis le début du segment courant de la séquence d'utilisation particulière du véhicule et la valeur d'inertie thermique pour le segment courant déterminée à partir des données caractérisant au moins une valeur d'inertie thermique en regard d'au moins un segment. Plus spécifiquement, au cours de cette étape du procédé selon l'invention, le système 100 selon l'invention détermine une valeur de la température ponctuelle du composant durant un segment courant de la séquence d'utilisation particulière du véhicule, *T(t)* selon la formule :

[MATH]

$$T(t) = T_0 + \Delta T * (1 - \exp(-\left(\frac{Du}{inertie\_thermique}\right)))$$

où $T_0$ est la température stabilisée durant le segment de la séquence d'utilisation particulière du véhicule qui précède le segment courant de la séquence d'utilisation particulière du véhicule, *ΔT* est la différence entre la température stabilisée durant le segment courant de la séquence d'utilisation particulière du véhicule et la température stabilisée durant le segment de la séquence d'utilisation particulière du véhicule qui précède le segment courant de la séquence d'utilisation particulière du véhicule, *Du* est la durée écoulée depuis le début du segment courant de la séquence d'utilisation particulière du véhicule et *inertie_thermique* est la valeur d'inertie thermique pour le segment courant. Ainsi, selon l'exemple évoqué ci-dessus, le système 100 selon l'invention détermine au cours de cette dixième étape 210 du procédé les valeurs ponctuelles de la température du composant, par exemple durant les segments « *ville* » et « *ville bouchon* », de telle sorte que :

- $$T(1)=5+(50-5)*(1-exp(-1/inertie\_thermique\_ville)$$

- $$T(2)=5+(50-5)*(1-exp(-2/inertie\_thermique\_ville)$$

- ...

- $$T(5)=5+(50-5)*(1-exp(-5/inertie\_thermique\_ville)$$

- $$T(6)=50+(80-50)\,)*(1-exp(-1/inertie\_thermique\_ville\_bouchon)$$

- $$T(7)=50+(80-50)\,)*(1-exp(-2/inertie\_thermique\_ville\_bouchon)$$

- ...

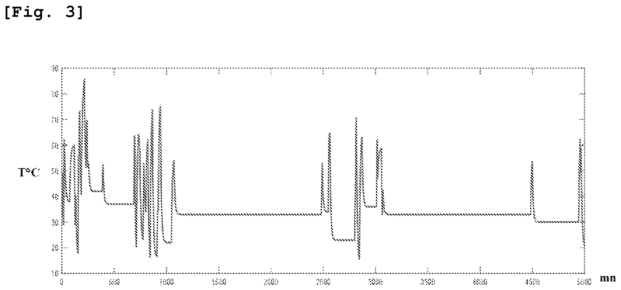

Selon une onzième étape 211 du procédé selon l'invention, le système 100 selon l'invention détermine les données caractérisant au moins une évolution de la température d'un composant d'un véhicule automobile en utilisant les données caractérisant au moins une valeur ponctuelle de la température du composant durant un segment courant de la séquence d'utilisation particulière du véhicule. Pour ce faire, le système reproduit de manière itératives les quatre étapes précédentes 207-210 du procédé jusqu'à atteindre l'estimation du nombre de séquences d'utilisation déterminé au cours de la sixième étape 206 du procédé. Ainsi, au terme de cette onzième étape 211 du procédé, le système 100 selon l'invention détermine donc des données qui caractérisent une évolution de la température du composant au cours d'un intervalle de temps qui sont par exemple représentées par le graphique illustré sur la figure 3.

En outre, selon un premier mode de réalisation particulier, le système 100 selon l'invention réalise une autre étape au cours de laquelle il détermine des données caractérisant au moins une valeur de la température du composant en regard d'une valeur indicative d'une proportion, d'une durée et/ou d'un mode d'utilisation du véhicule.

Pour ce faire, le système 100 selon l'invention réalise une première étape subsidiaire au cours de laquelle il reproduite de manière itérative les étapes 206-211 du procédé selon l'invention. En particulier, le système 100 selon l'invention réalise, de manière itérative, un tirage aléatoire d'un nombre de séquences d'utilisation, en fonction duquel il effectue une pluralité de tirages aléatoires de séquences d'utilisation particulières, une pluralité de tirages aléatoires de durées (ou distances), une pluralité de tirage aléatoires de températures stabilisées, une pluralité de calculs de valeurs ponctuelles de température du composant afin de déterminer une pluralité d'évolutions de la température du composant. Ainsi, au terme de cette première étape subsidiaire, le système 100 selon l'invention détermine une évolution de la température d'un composant pour une pluralité de véhicules ayant des longévités différentes.

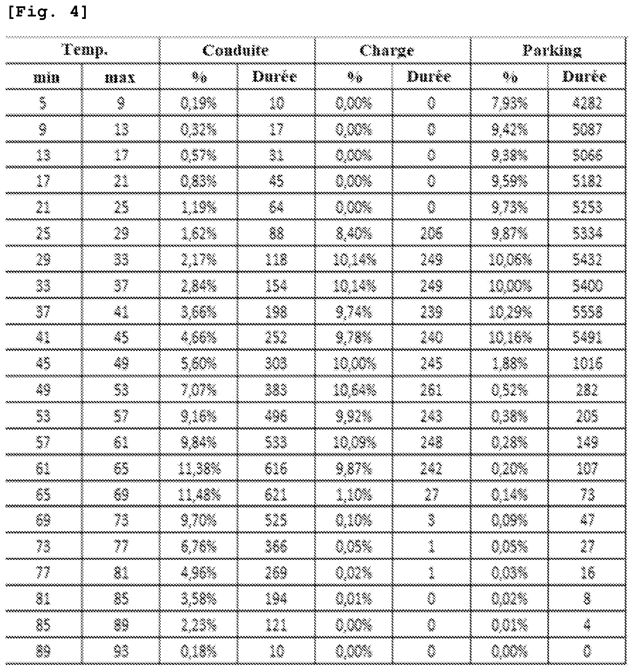

Ensuite, selon une deuxième étape subsidiaire, le système 100 selon l'invention utilise ces différentes évolutions de la température du composant pour des véhicules de longévités distinctes déterminées au cours de l'étape précédente pour déterminer, par exemple en calculant pour chaque évolution des moyennes en regard de durées et de températures puis en faisant des calculs de moyennes entre toutes les évolutions, les données caractérisant au moins une valeur de la température du composant en regard d'une valeur indicative d'une proportion, d'une durée et/ou d'un mode d'utilisation (e.e. conduite, charge, parking) du véhicule. De manière schématique, ces données correspondent par exemple au tableau illustré à la figure 4.

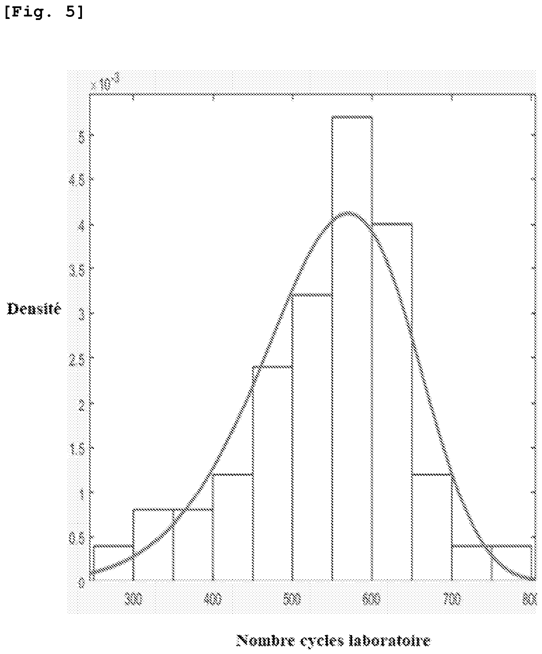

Par ailleurs, selon un deuxième mode de réalisation particulier, le système selon l'invention réalise une première étape subsidiaire au cours de laquelle il utilise les données caractérisant au moins une évolution de la température d'un composant d'un véhicule automobile pour déterminer, par transformée de Fourier, des données caractérisant les fréquences et les amplitudes correspondant à plusieurs séquences d'utilisation. Puis, le système 100 selon l'invention réalise une deuxième étape subsidiaire au cours de laquelle il détermine des données caractérisant un nombre de cycles de laboratoire équivalent en fonction des données caractérisant les fréquences et les amplitudes correspondant à plusieurs séquences d'utilisation. Pour ce faire, le système 100 selon l'invention utilise les fréquences et les amplitudes en regard de lois d'endommagement, par exemple la loi de Coffin-Manson et/ou de Norris-Landzberg. Par cette étape, le système 100 selon l'invention détermine, pour une évolution de la température du composant donnée, un nombre de cycles de laboratoire équivalents. Et, en procédant de manière itérative comme expliqué ci-dessus, càd. en déterminant une pluralité d'évolutions pour plusieurs véhicules de longévité distinctes, le système 100 selon l'invention détermine une pluralité de nombres de cycles de laboratoires différents qui peuvent être illustrés par l'organigramme présenté sur la figure 5, dont peut ensuite être déduit la densité de probabilité qui définit la longévité d'un composant.

Par conséquent, aux termes du procédé et du système selon l'invention décrits ci-dessus, une solution est fournie pour déterminer l'évolution de la température d'un composant d'un véhicule automobile au cours d'un intervalle de temps. Ainsi, le procédé et le système selon l'invention contribuent pour permettre de déterminer avec une plus grande précision la longévité, i.e. la fiabilité, des composants de véhicules automobiles, en particulier ceux qui sont affectés par des variations de leur température. Par ces moyens, le procédé et le système selon l'invention s'appliquent donc avantageusement aux phases de recherche et de développement de composants de véhicules automobiles, en fournissant aux concepteurs de composants de véhicules automobiles des outils informatiques qui facilitent les étapes de contrôle de la sureté de fonctionnement des composants des véhicules.

**Revendications**

1. Procédé de détermination, par un système informatique (100), de données caractérisant au moins une évolution de la température d'un composant d'un véhicule automobile au cours d'un intervalle de temps, **caractérisé en ce que** le procédé comprend les étapes de :

   i) acquérir des données caractérisant au moins une probabilité de réalisation d'au moins une séquence d'utilisation du véhicule ;
   ii) acquérir des données caractérisant au moins une durée ou au moins une distance et au moins une température stabilisée en regard d'au moins un segment d'au moins une séquence d'utilisation du véhicule ;
   iii) acquérir des données caractérisant au moins une valeur d'inertie thermique en regard d'au moins un segment ;
   iv) acquérir des données caractérisant au moins un nombre de séquences d'utilisation ;
   v) acquérir des données caractérisant au moins une valeur représentant l'autonomie du véhicule ;
   vi) déterminer des données caractérisant une estimation d'un nombre de séquences d'utilisation réalisées ;
   vii) déterminer des données caractérisant une séquence d'utilisation particulière du véhicule en fonction des données caractérisant au moins une probabilité de réalisation d'au moins une séquence d'utilisation du véhicule ;
   viii) déterminer des données caractérisant une durée pour chacun des segments de la séquence d'utilisation particulière du véhicule ;
   ix) déterminer des données caractérisant une valeur de température stabilisée pour chacun des segments de la séquence d'utilisation particulière du véhicule ;
   x) déterminer des données caractérisant une valeur ponctuelle de la température du composant durant un segment courant de la séquence d'utilisation particulière du véhicule en fonction de données caractérisant la température stabilisée durant le segment de la séquence d'utilisation particulière du véhicule qui précède le segment courant de la séquence d'utilisation particulière du véhicule, de données caractérisant la différence entre la température stabilisée durant le segment courant de la séquence d'utilisation particulière du véhicule et la température stabilisée durant le segment de la séquence d'utilisation particulière du véhicule qui précède le segment courant de la séquence d'utilisation particulière du véhicule et de données caractérisant le rapport entre la durée écoulée depuis le début du segment courant de la séquence d'utilisation particulière du véhicule et la valeur d'inertie thermique pour le segment courant déterminée à partir des données caractérisant au moins une valeur d'inertie thermique en regard d'au moins un segment ; et
   xi) déterminer les données caractérisant au moins une évolution de la température d'un composant d'un véhicule automobile en utilisant les données caractérisant au moins une valeur ponctuelle de la température du composant durant un segment courant de la séquence d'utilisation particulière du véhicule.

2. Procédé selon la revendication 1, **caractérisé en ce que** l'étape vi) comprend une étape consistant à réaliser un tirage aléatoire à partir des données caractérisant au moins un nombre de séquences d'utilisation.

3. Procédé selon l'une des revendications précédentes, **caractérisé en ce que** l'étape viii) comprend une étape consistant à réaliser un tirage aléatoire à partir des données caractérisant au moins une durée en regard d'au moins un segment d'au moins une séquence d'utilisation du véhicule.

4. Procédé selon l'une des revendications précédentes, **caractérisé en ce que** l'étape ix) comprend une étape consistant à réaliser un tirage aléatoire à partir des données caractérisant au moins une température stabilisée en regard d'au moins un segment d'au moins une séquence d'utilisation du véhicule.

**5.** Procédé selon l'une des revendications précédentes, **caractérisé en ce que** le procédé comprend en outre une étape consistant à déterminer des données caractérisant au moins une valeur de la température du composant en regard d'une valeur indicative d'une proportion, d'une durée et/ou d'un mode d'utilisation du véhicule.

**6.** Procédé selon l'une des revendications 1-4, **caractérisé en ce que** le procédé comprend en outre les étapes de :

• utiliser les données caractérisant au moins une évolution de la température d'un composant d'un véhicule automobile pour déterminer, par transformée de Fourier, des données caractérisant les fréquences et les amplitudes correspondant à plusieurs séquences d'utilisation ;
• déterminer des données caractérisant un nombre de cycles de laboratoire équivalent en fonction des données caractérisant les fréquences et les amplitudes correspondant à plusieurs séquences d'utilisation.

**7.** Procédé selon l'une des revendications précédentes, **caractérisé en ce que** les données caractérisant au moins une probabilité de réalisation d'au moins une séquence d'utilisation du véhicule sont générées de sorte à matérialiser une chaine de Markov.

**8.** Système (100) pour déterminer des données caractérisant au moins une évolution de la température d'un composant d'un véhicule automobile au cours d'un intervalle de temps, **caractérisé en ce que** le système comprend au moins une unité de traitement d'informations (101), comprenant au moins un processeur, et un support de stockage de données (102) configurés pour mettre en oeuvre un procédé selon l'une quelconque des revendications précédentes.

**9.** Programme d'ordinateur comprenant des instructions de code de programme pour l'exécution des étapes d'un procédé selon l'une quelconque des revendications 1-7 lorsque ledit programme est exécuté sur un ordinateur.

**10.** Support utilisable dans un ordinateur, **caractérisé en ce qu'**un programme selon la revendication 9 y est enregistré.


**Patentansprüche**

**1.** Verfahren zum Ermitteln von Daten durch ein Computersystem (100), die mindestens eine Entwicklung der Temperatur einer Komponente eines Kraftfahrzeugs während eines Zeitintervalls charakterisieren, **dadurch gekennzeichnet, dass** das Verfahren die Schritte umfasst:

i) Daten zu erfassen, die mindestens eine Wahrscheinlichkeit für die Durchführung mindestens einer Nutzungssequenz des Fahrzeugs charakterisieren;
ii) Daten zu erfassen, die mindestens eine Dauer oder mindestens eine Distanz und mindestens eine stabilisierte Temperatur in Bezug auf mindestens einen Abschnitt mindestens einer Nutzungssequenz des Fahrzeugs charakterisieren;
iii) Daten zu erfassen, die mindestens einen thermischen Trägheitswert in Bezug auf mindestens ein Segment charakterisieren;
iv) Daten erfassen, die mindestens eine Reihe von Nutzungssequenzen charakterisieren;
v) Daten erfassen, die mindestens einen Wert charakterisieren, der die Autonomie des Fahrzeugs darstellt;
vi) Daten ermitteln, die eine Schätzung einer Anzahl durchgeführter Nutzungssequenzen charakterisieren;
vii) Bestimmen von Daten, die eine bestimmte Nutzungssequenz des Fahrzeugs charakterisieren, basierend auf den Daten, die mindestens eine Wahrscheinlichkeit der Durchführung mindestens einer Nutzungssequenz des Fahrzeugs charakterisieren;
viii) Daten ermitteln, die eine Dauer für jedes der Segmente der bestimmten Nutzungssequenz des Fahrzeugs charakterisieren;
ix) Daten ermitteln, die einen stabilisierten Temperaturwert für jedes der Segmente der jeweiligen Nutzungssequenz des Fahrzeugs charakterisieren;
x) Bestimmen von Daten, die einen Punktwert der Temperatur der Komponente während eines aktuellen Abschnitts der bestimmten Nutzungssequenz des Fahrzeugs charakterisieren, als Funktion von Daten, die die stabilisierte Temperatur während des Abschnitts der bestimmten Nutzungssequenz des Fahrzeugs charakterisieren, der dem aktuellen vorangeht Segment der bestimmten Nutzungssequenz des Fahrzeugs, Daten, die den Unterschied zwischen der Temperatur, die sich während des aktuellen Segments der bestimmten Nutzungssequenz des Fahrzeugs stabilisiert hat, und der Temperatur, die sich während des Segments der bestimmten Nutzungssequenz des Fahrzeugs stabilisiert hat, das dem aktuellen Segment vorausgeht, charakterisieren des bestimmten Nutzungsablaufs des Fahrzeugs und Daten, die die Beziehung zwischen der seit Beginn des aktuellen Abschnitts des bestimmten Nutzungsablaufs des Fahrzeugs verstrichenen Dauer und dem thermischen Trägheitswert für den aktuellen Abschnitt charakterisieren, der aus Daten ermittelt wird, die mindestens eine thermische Trägheit charakterisieren Wert in Bezug auf mindestens ein Segment; Und

xi) Bestimmen der Daten, die mindestens eine Änderung der Temperatur einer Komponente eines Kraftfahrzeugs charakterisieren, unter Verwendung der Daten, die mindestens einen Punktwert der Temperatur der Komponente während eines aktuellen Abschnitts des jeweiligen Nutzungsablaufs des Fahrzeugs charakterisieren.

2. Verfahren nach Anspruch 1, **dadurch gekennzeichnet, dass** Schritt vi) einen Schritt umfasst, der darin besteht, eine Zufallsziehung aus den Daten durchzuführen, die mindestens eine Anzahl von Nutzungssequenzen charakterisieren.

3. Verfahren nach einem der vorhergehenden Ansprüche, **dadurch gekennzeichnet, dass** Schritt viii) einen Schritt umfasst, der darin besteht, eine Zufallsziehung aus den Daten durchzuführen, die mindestens eine Dauer in Bezug auf mindestens einen Abschnitt mindestens einer Sequenz der Fahrzeugnutzung charakterisieren .

4. Verfahren nach einem der vorhergehenden Ansprüche, **dadurch gekennzeichnet, dass** Schritt ix) einen Schritt umfasst, der darin besteht, eine Zufallsziehung aus den Daten durchzuführen, die mindestens eine stabilisierte Temperatur in Bezug auf mindestens ein Segment mindestens einer Sequenz charakterisieren der Fahrzeugnutzung.

5. Verfahren nach einem der vorhergehenden Ansprüche, **dadurch gekennzeichnet, dass** das Verfahren außerdem einen Schritt umfasst, der darin besteht, Daten zu ermitteln, die mindestens einen Wert der Temperatur des Bauteils in Bezug auf einen Wert charakterisieren, der einen Anteil, eine Dauer und/oder oder Art der Nutzung des Fahrzeugs.

6. Verfahren nach einem der Ansprüche 1-4, **dadurch gekennzeichnet, dass** das Verfahren weiterhin die Schritte umfasst:

• die Daten verwenden, die mindestens eine Änderung der Temperatur einer Komponente eines Kraftfahrzeugs charakterisieren, um durch FourierTransformation Daten zu bestimmen, die die Frequenzen und Amplituden charakterisieren, die mehreren Nutzungssequenzen entsprechen;
• Bestimmen Sie Daten, die eine äquivalente Anzahl von Laborzyklen charakterisieren, basierend auf Daten, die die Frequenzen und Amplituden charakterisieren, die mehreren Verwendungssequenzen entsprechen.

7. Verfahren nach einem der vorhergehenden Ansprüche, **dadurch gekennzeichnet, dass** die mindestens eine Wahrscheinlichkeit der Durchführung mindestens eines Nutzungsablaufs des Fahrzeugs charakterisierenden Daten so generiert werden, dass eine Markov-Kette entsteht.

8. System (100) zur Ermittlung von Daten, die mindestens eine Entwicklung der Temperatur einer Komponente eines Kraftfahrzeugs während eines Zeitintervalls charakterisieren, **dadurch gekennzeichnet, dass** das System mindestens eine Informationsverarbeitungseinheit (101) umfasst, die mindestens einen Prozessor umfasst und ein Datenspeichermedium (102), das zur Implementierung eines Verfahrens nach einem der vorhergehenden Ansprüche konfiguriert ist.

9. Computerprogramm, das Programmcodeanweisungen zum Ausführen der Schritte eines Verfahrens nach einem der Ansprüche 1-7 umfasst, wenn das Programm auf einem Computer ausgeführt wird.

10. In einem Computer einsetzbarer Träger, **dadurch gekennzeichnet, dass** dort ein Programm nach Anspruch 9 aufgezeichnet ist.

**Claims**

1. Method for determining, by a computer system (100), data characterizing at least one change in the temperature of a component of a motor vehicle during a time interval, **characterized in that** the method comprises the steps of:

i) acquiring data characterizing at least one probability of carrying out at least one sequence of use of the vehicle;
ii) acquiring data characterizing at least one duration or at least one distance and at least one stabilized temperature with respect to at least one segment of at least one sequence of use of the vehicle;

iii) acquiring data characterizing at least one thermal inertia value with respect to at least one segment;

iv) acquiring data characterizing at least one number of sequences of use;

v) acquiring data characterizing at least one value representing the autonomy of the vehicle;

vi) determining data characterizing an estimate of a number of sequences of use carried out;

vii) determining data characterizing a particular sequence of use of the vehicle as a function of the data characterizing at least one probability of realization of at least one sequence of use of the vehicle;

viii) determining data characterizing a duration for each of the segments of the particular sequence of use of the vehicle;

ix) determining data characterizing a stabilized temperature value for each of the segments of the particular sequence of use of the vehicle;

x) determining data characterizing a point value of the temperature of the component during a current segment of the particular vehicle use sequence as a function of data characterizing the stabilized temperature during the segment of the particular vehicle use sequence that precedes the current segment of the particular vehicle use sequence, data characterizing the difference between the stabilized temperature during the current segment of the particular vehicle use sequence and the stabilized temperature during the segment of the particular vehicle use sequence that precedes the current segment of the particular vehicle use sequence and data characterizing the ratio between the time elapsed since the start of the current segment of the particular vehicle use sequence and the thermal inertia value for the current segment determined from the data characterizing at least one thermal inertia value with respect to at least one segment; and

xi) determining the data characterizing at least one change in the temperature of a component of a motor vehicle using the data characterizing at least one point value of the temperature of the component during a current segment of the particular sequence of use of the vehicle.

2. Method according to claim 1, **characterized in that** step vi) comprises a step consisting of carrying out a random draw from the data characterizing at least one number of sequences of use.

3. Method according to one of the preceding claims, **characterized in that** step viii) comprises a step consisting of carrying out a random draw from the data characterizing at least one duration with respect to at least one segment of at least one sequence of use of the vehicle.

4. Method according to one of the preceding claims, **characterized in that** step ix) comprises a step consisting of carrying out a random draw from the data characterizing at least one stabilized temperature with respect to at least one segment of at least one sequence of use of the vehicle.

5. Method according to one of the preceding claims, **characterized in that** the method further comprises a step consisting in determining data characterizing at least one value of the temperature of the component with respect to a value indicative of a proportion, a duration and/or a mode of use of the vehicle.

6. Method according to one of claims 1-4, **characterized in that** the method further comprises the steps of:

• using the data characterizing at least one change in the temperature of a component of a motor vehicle to determine, by Fourier transform, data characterizing the frequencies and amplitudes corresponding to several sequences of use;

• determining data characterizing an equivalent number of laboratory cycles as a function of the data characterizing the frequencies and amplitudes corresponding to several sequences of use.

7. Method according to one of the preceding claims, **characterized in that** the data characterizing at least one probability of carrying out at least one sequence of use of the vehicle are generated so as to materialize a Markov chain.

8. System (100) for determining data characterizing at least one change in the temperature of a component of a motor vehicle during a time interval, **characterized in that** the system comprises at least one information processing unit (101), comprising at least one processor, and a data storage medium (102) configured to implement a method according to any one of the preceding claims.

9. Computer program comprising program code instructions for executing the steps of a method according to any one of claims 1-7 when said program is executed on a computer.

**10.** Medium usable in a computer, **characterized in that** a program according to claim 9 is recorded therein.

[Fig. 1]

[Fig. 2]

[Fig. 3]

[Fig. 4]

| Temp. | | Conduite | | Charge | | Parking | |
|---|---|---|---|---|---|---|---|
| min | max | % | Durée | % | Durée | % | Durée |
| 5 | 9 | 0,19% | 10 | 0,00% | 0 | 7,93% | 4282 |
| 9 | 13 | 0,32% | 17 | 0,00% | 0 | 9,42% | 5087 |
| 13 | 17 | 0,57% | 31 | 0,00% | 0 | 9,38% | 5066 |
| 17 | 21 | 0,83% | 45 | 0,00% | 0 | 9,59% | 5182 |
| 21 | 25 | 1,19% | 64 | 0,00% | 0 | 9,73% | 5253 |
| 25 | 29 | 1,62% | 88 | 8,40% | 206 | 9,87% | 5334 |
| 29 | 33 | 2,17% | 118 | 10,14% | 249 | 10,06% | 5432 |
| 33 | 37 | 2,84% | 154 | 10,14% | 249 | 10,00% | 5400 |
| 37 | 41 | 3,66% | 198 | 9,74% | 239 | 10,29% | 5558 |
| 41 | 45 | 4,66% | 252 | 9,78% | 240 | 10,16% | 5491 |
| 45 | 49 | 5,60% | 303 | 10,00% | 245 | 1,88% | 1016 |
| 49 | 53 | 7,07% | 383 | 10,64% | 261 | 0,52% | 282 |
| 53 | 57 | 9,16% | 496 | 9,92% | 243 | 0,38% | 205 |
| 57 | 61 | 9,84% | 533 | 10,09% | 248 | 0,28% | 149 |
| 61 | 65 | 11,38% | 616 | 9,87% | 242 | 0,20% | 107 |
| 65 | 69 | 11,48% | 621 | 1,10% | 27 | 0,14% | 73 |
| 69 | 73 | 9,70% | 525 | 0,10% | 3 | 0,09% | 47 |
| 73 | 77 | 6,76% | 366 | 0,05% | 1 | 0,05% | 27 |
| 77 | 81 | 4,96% | 269 | 0,02% | 1 | 0,03% | 16 |
| 81 | 85 | 3,58% | 194 | 0,01% | 0 | 0,02% | 8 |
| 85 | 89 | 2,23% | 121 | 0,00% | 0 | 0,01% | 4 |
| 89 | 93 | 0,18% | 10 | 0,00% | 0 | 0,00% | 0 |

[Fig. 5]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2100241

- FR 2959031